# EUROPÄISCHE PATENTSCHRIFT

(11) **EP 1 091 553 B1**
(45) Veröffentlichungstag und Bekanntmachung des Hinweises auf die Patenterteilung: **17.05.2006**
(21) Anmeldenummer: 00440244.2
(22) Anmeldetag: 15.09.2000
(51) Int. Cl.: H04M 7/00, H04L 12/66

(54) **Server zur Unterstützung des Aufbaus von Fernsprechverbindungen über ein IP Netz**
Server supporting setup of telephone calls in an IP-network
Serveur supportant l'établissement d'appels téléphoniques dans un réseau IP

(30) Priorität: 08.10.1999 DE 19948458
(43) Veröffentlichungstag der Anmeldung: 11.04.2001
(73) Patentinhaber: ALCATEL, 75008 Paris (FR)
(72) Erfinder: Stahl, Uwe, 71229 Leonberg (DE); Krank, Lothar, 71254 Ditzingen (DE); Lautenschlager, Wolfgang, 71287 Weissach-Flacht (DE); Weik, Hartmut, 70195 Stuttgart (DE)
(74) Vertreter: Rausch, Gabriele

(56) Entgegenhaltungen:
- WO-A-98/36543
- US-A- 5 949 867
- ROSENBERG J ET AL: "Internet telephony gateway location" INFOCOM '98. SEVENTEENTH ANNUAL JOINT CONFERENCE OF THE IEEE COMPUTER AND COMMUNICATIONS SOCIETIES. PROCEEDINGS. IEEE SAN FRANCISCO, CA, USA 29 MARCH-2 APRIL 1998, NEW YORK, NY, USA,IEEE, US, Bd. 2, 29. März 1998 (1998-03-29), Seiten 488-496, XP010270397 ISBN: 0-7803-4383-2
- PATENT ABSTRACTS OF JAPAN Bd. 1998, Nr. 14, 31. Dezember 1998 (1998-12-31) & JP 10 233808 A (NIPPON TELEGR & TELEPH CORP <NTT>), 2. September 1998 (1998-09-02)
- "A Primer on the H.323 Series Standard" A DATABEAM CORPORTATION WHITE PAPER, 15. Mai 1998 (1998-05-15), XP002152854

## Beschreibung

Die Erfindung betrifft ein Verfahren zur Unterstützung des Aufbaus einer Fernsprechverbindung, die von einem rufenden Endgerät über eine IP Netz an ein Fernsprechendgeräte eines Fernsprechnetzes geführt wird nach dem Oberbegriff von Anspruch 1, einen Server zur Unterstützung des Aufbaus von Fernsprechverbindungen zwischen rufenden Endgeräten und gerufenen Endgeräten über ein IP Netz, noch dem Oberbegriff von Anspruch 9, und ein Computer Produkt zur Unterstützung des Aufbaus von Fernsprechverbindungen zwischen rufenden Endgeräten und gerufenen Endgeräten über eine IP Netz nach dem Oberbegriff von Anspruch 11.

Die Erfindung geht von dem Aufbau von Fernsprechverbindungen über IP Netze aus, wie sie beispielsweise in der ITU-T Spezifikation H.323, 2/1998, Seiten 1 bis 2 und Seiten 12 bis 34 geschildert ist.

Ein H.323 Gateway bildet ein Interface zwischen einem IP Netz (IP = Internet Protocol) und einem Fernsprechnetz. Das Gateway kodiert, komprimiert und paketiert von dem Fernsprechnetz stammende Sprachund/ oder Videosignale und transportiert sie anschließend paketiert in IP Paketen zu einem Endgerät des IP Netzes oder zu einem anderen H.323 Gateway. Umgekehrt dekodiert, dekomprimiert und depaketiert das Gateway die von einem Endgerät des IP Netzes oder von einem anderen H.323 Gateway stammenden IP Pakete, um die Sprach- und/ oder Videosignale über das Fernsprechnetz zu einem Endgerät des Fernsprechnetzes zu führen. Damit wird es ermöglicht, eine Fernsprechverbindung, über die Sprach- und/oder Videosignale transportiert werden, über ein IP Netz zu führen.

Für die Steuerung der Wegeleitung innerhalb des IP Netzes ist es hierbei möglich, daß die VOIP Gateways einen Gatekeeper kontaktieren. Dieser Gatekeeper stellt den VOIP Gateways eine zentraler Adress-Übersetzungsfunktion zur Verfügung.

Ein solches Gateway wird beispielsweise in der Internationalen Patentanmeldung WO98/36543 offenbart. Dieses Gateway verbindet transparent ein Telefonnetzwerk mit dem Internet. Insbesondere das Vermitteln im Telefonnetz anhand von Nummernplänen, wie es im U.S. Patent Nr. 5,949,867 beschrieben ist, wird von dem Gateway nicht berücksichtigt.

Der Erfindung liegt nun die Aufgabe zugrunde, den Aufbau einer Fernsprechverbindung, die teilweise über ein IP Netz geführt werden kann, zu beschleunigen.

Diese Aufgabe wird gelöst durch ein Verfahren zur Unterstützung des Aufbaus einer Fernsprechverbindung, die von einem rufenden Endgerät über eine IP Netz an ein Fernsprechendgeräte eines Fernsprechnetzes geführt wird nach der Lehre von Anspruch 1, einen Server zur Unterstützung des Aufbaus von Fernsprechverbindungen zwischen rufenden Endgeräten und gerufenen Endgeräten über ein IP Netz, nach der Lehre von Anspruch 9, und ein Computer Produkt zur Unterstützung des Aufbaus von Fernsprechverbindungen zwischen rufenden Endgeräten und gerufenen Endgeräten über eine IP Netz nach der Lehre von Anspruch 11.

Der Erfindung liegt hierbei der Gedanke zugrunde, daß zur Festlegung der Wegeleitung einer VOIP Fernsprechverbindung (VOIP = Voice over IP) durch ein IP Netz ein Server eines Fernsprechnetzes kontaktiert wird, wenn die VOIP Fernsprechverbindung durch das IP Netz zu einem Fernsprechendgerät des Fernsprechnetzes zu führen ist. Die von dem Server des Fernsprechnetzes über die Wegeleitung der VOIP Fernsprechverbindung innerhalb des Fernsprechnetzes bereitgestellten Informationen, insbesondere Rufnummernportobilitätsinformationen, werden sodann zur Steuerung der Wegeleitung innerhalb des IP Netzes verwendet.

Der Vorteil der Erfindung besteht darin, daß der Verbindungsaufbau und die Wegeleitung von VOIP Fernsprechverbindungen optimiert und beschleunigt wird.

Durch die Erfindung wird es weiter ermöglicht, daß eine VOIP Fernsprechverbindung möglichst direkt zum gerufenen Endgerät aufgebaut wird. Die Strecke, über die die Fernsprechverbindung im Fernsprechnetz geführt wird, wird minimiert. Es wird vermieden, daß die Fernsprechverbindung über die Netze mehrerer Fernsprechnetz-Betreiber zum gerufenen Endgerät geführt wird. Aus all diesen Vorteilen resultieren bei der Anwendung der Erfindung sowohl für den rufenden Teilnehmer, der eine VOIP Verbindung initiiert, als auch für den VOIP Dienstbetreiber dann auch Gebührenvorteile.

Vorteilhafte Ausgestaltungen der Erfindung sind den Unteransprüchen zu entnehmen.

Hierbei ist es insbesondere vorteilhaft, daß für eine VOIP Fernsprechverbindung sowohl gerufene Fernsprechendgeräte des Fernsprechnetzes als auch gerufene IP Endgeräte innerhalb des IP Netzes mittels einer Fernsprechrufnummer adressiert werden und Rufnummernportabilität zwischen den IP Endgeräten des IP Netzes zugeordneten Rufnummernbereichen und Fernsprechendgeräten des Fernsprechnetzes zugeordneten Rufnummernbereichen ermöglicht wird.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines VOIP Kommunikationssystems mit einem erfindungsgemäßen Server.
- Fig. 2: zeigt eine funktionelle Darstellung eines Ausschnitts aus dem VOIP Kommunikationssystem nach Fig. 1.

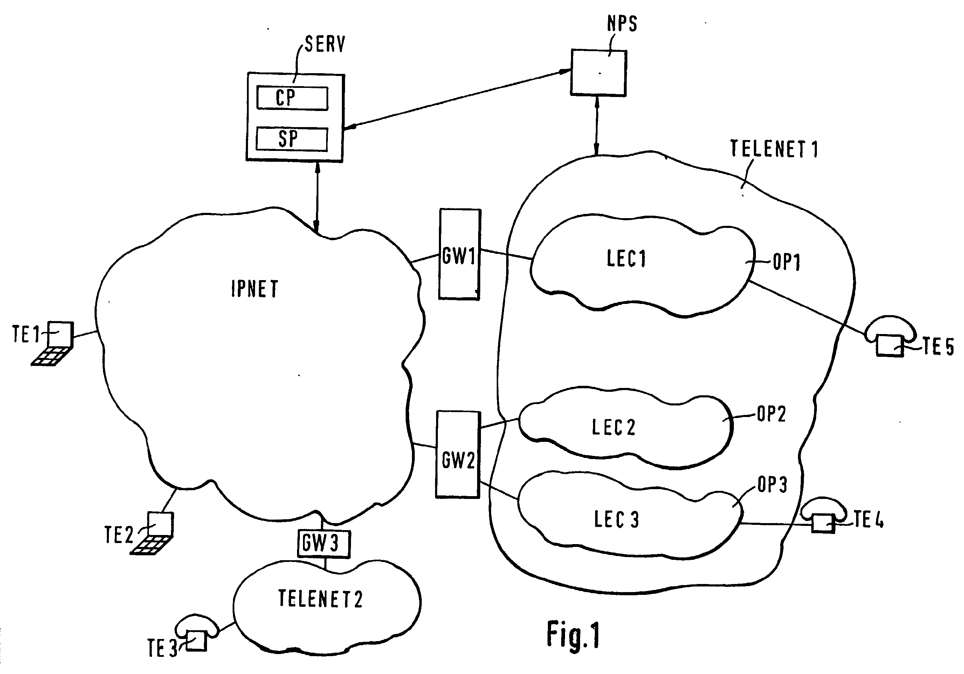

Fig. 1 zeigt drei Kommunikationsnetze IPNET, TELENET1 und TELENET2, drei VOIP Gateways GW1 bis GW3, zwei Server SERV und NPS und fünf Endgeräte TE1 bis TE5. Das Kommunikationsnetze IPNET ist mit dem Kommunikationsnetz TELENET1 über die VOIP Gateways GW1 und GW2 und mit dem Kommunikationsnetz TELENET2 über das VOIP Gateway GW3 verbunden. Die Endgeräte TE1 und TE2, TE3, TE4 und TE5 sind mit den Kommunikationsnetzen IPNET, TELENET2 bzw. TELENET1 verbunden. Der Server SERV ist dem Kommunikationsnetz IPNET zugeordnet und tauscht mit diesem Daten aus. Der Server NPS ist dem Kommunikationsnetz TELENET1 zugeordnet und tauscht mit diesem Daten aus. Die Server SERV und NPS kommunizieren miteinander.

Bei den Kommunikationsnetzen TELENET1 und TELENET2 handelt es sich um ein Fernsprechnetze, beispielsweise um ISDN-Netze (ISDN = Integrated Digital Network) oder um PSTN-Netze (PSTN = Public Switched Telephone Network). Es ist hierbei auch möglich, daß die Kommunikationsnetze TELENET1 und TELENET2 jeweils von mehreren Teilnetzen gebildet werden, die auch unterschiedlichen Netzbetreibern zugeordnet sein können. Weiter können solche Teilnetze auch Mobilfunknetze, beispielsweise nach dem GSM Standard (GSM = Global System for Mobile Communication) sein. Endgeräte können mit den Kommunikationsnetzen TELENET1 und TELENET2 somit beispielsweise über einen analogen PSTN Anschluß, einen ISDN Anschluß oder eine Luftschnittstelle nach dem GSM oder DECT Standard (DECT = Digital European Cordless Telecommunication) verbunden sein.

In dem Kommunikationsnetz TELENET1 stehen Teilnehmern eines Teilnehmeranschlußnetzbereiches parallel zwei oder mehr Zugangsnetzes verschiedener Zugangsnetzbetreiber zur Verfügung. Von diesen Zugangsnetzen sind in Fig. 1 beispielhaft drei Zugangsnetze LEC1 bis LEC3 gezeigt, die den Zugangsnetzbetreibern OP1, OP2, bzw. OP3 zugeordnet sind und den Teilnehmern ein und desselben Teilnehmeranschlußnetzbereiches parallel zur Verfügung stehen.

Bei den Endgeräten TE3 bis TE5 handelt es sich um Fernsprechendgeräte, beispielsweise um ISDN-Telefone oder um Mobilfunk-Telefone. Die Endgeräte TE4 und TE5 sind demselben Teilnehmeranschlußnetzbereich des Kommunikationsnetzes TELENET1 zugeordnet, wobei das Endgerät TE4 über das Zugangsnetz LEC3 und das Endgerät TE5 über das Zugangsnetz LEC1 mit dem Kommunikationsnetz TELENET1 verbunden ist.

Bei dem Kommunikationsnetz IPNET handelt es sich um ein IP Netz (IP = Internet Protokoll). Es wird von einem Datennetz gebildet, das als Layer 3 Schicht ein IP Protokoll verwendet (IP = Internet Protokoll). Beispiele für solch ein IP Protokoll sind die IPv4 oder IPv6 Protokolle.

Bei den Endgeräten TE1 und TE2 handelt es sich jeweils um IP Endgeräte (IP = Internet Protokoll), beispielsweise um internetfähige Telefone oder um einen Computer, der mit einer Schnittstellenkarte zur Kommunikation über das Kommunikationsnetz IPNET ausgestattet ist. Die Endgeräten TE1 und TE2 sind weiter mit einer VOIP Software ausgestattet (VOIP = Voice over IP), die es dessen Benutzer ermöglicht, eine Fernsprechkommunikation über das Kommunikationsnetz IPNET zu führen.

Die Anzahl der VOIP Gateways GW1 bis GW3 ist beispielhaft gewählt. Bei den VOIP Gateways GW1 bis GW3 handelt es sich um Gateways, die den Aufbau einer Fernsprechverbindung durch das Kommunikationsnetz IPNET ermöglichen. Sie führen mittels der Unterstützung eines Gatekeepers eine Adressübersetzung in eine IP Adresse, die Codierung/ Decodierung sowie die Paketierung/Depaketierung des Datenstroms für den Transport durch das Kommunikationsnetz IPNET, und weitere Funktionen wie Echo Cancellation durch. Weiter steuern sie den Verbindungsaufbau durch das Kommunikationsnetz IPNET. Die VOIP Gateways GW1 bis GW3 können beispielsweise gemäß der ITU-T Empfehlung H.323 realisiert sein.

Eine Menge von zwischen den Kommunikationsnetzen IPNET und TELENET1 zur Verfügung stehenden VOIP Gateways sind jeweils einem oder mehreren Anschlußnetz oder Anschlußnetzbetreiber des Kommunikationsnetzes TELENET1 zugeordnet. Diese VOIP Gateways stellen jeweils einen direkte Übergang von dem Kommunikationsnetzes IPNET in das jeweilige zugeordneten Zugangsnetz bereit. Von dieser Menge von VOIP Gateways sind in Fig. 1 beispielhaft die VOIP Gateways GW1 und GW2 gezeigt. Das VOIP Gateway GW1 stellt hierbei einen Übergang von dem Kommunikationsnetzes IPNET in das Zugangsnetze LEC1 und das VOIP Gateway GW2 einen Übergang von dem Kommunikationsnetzes IPNET in die Zugangsnetze LEC2 und LEC3 bereit.

Der Server NPS stellt einen Rufnummernportabilitätsdienst innerhalb des Kommunikationsnetzes TELENET1 zur Verfügung und stellt in diesem Sinne einen Server des Kommunikationsnetzes TELENET1 dar. Weiter stellt der Server NPS einen Dienst für den Server SERV des Kommunikationsnetzes IPNET bereit.

Rufnummernportabilität bedeutet, daß in einem Teilnehmeranschlußnetzbereich, in dem mehrere Zugangsnetzes verschiedener Netzbetreiber parallel zur Verfügung stehen, die einem Fernsprechendgerät innerhalb des Kommunikationsnetzes TELENET1 zugeordnete Fernsprechrufnummer unabhängig von dem Zugangsnetz sein kann, über das der Teilnehmer angeschlossen ist. Wechselt so ein Teilnehmer eines solchen Teilnehmeranschlußnetzbereiches von einem ersten Anschlußnetzbetreiber zu einem zweiten Anschlußnetzbetreiber, so kann er seine ihm vom ersten Anschlußnetzbetreiber zugeordnete Fernsprechrufnummer mitnehmen und ist unter dieser Fernsprechrufnummer dann im Anschlußnetz des zweiten Anschlußnetzbetreibers erreichbar. Die Fernsprechrufnummer, die eigentlich dem Bereich des ersten Anschlußnetzbetreibers zugeordnet ist, ist in diesem Fall in den Bereich des zweiten Anschlußnetzbetreibers portiert.

Rufnummernportabilität wird von dem Server NPS beispielsweise dadurch in dem Kommunikationsnetz TELENET1 gewährleistet, daß der Server NPS bei jedem Verbindungsaufbau getriggert wird und überprüft, welchem Anschlußnetz ein durch die gerufene Fernsprechrufnummer adressiertes Fernsprechendgerät zugeordnet ist. Sodann veranlaßt er eine entsprechende Wegeleitung der Verbindung, indem er beispielsweise eine entsprechende Anschlußnetzbetreiberkennung in dem Ruf vermerkt. Eine weitere Möglichkeit besteht darin, daß jedem Anschlußnetzbetreiber ein bestimmter Rufnummernbereich zugeordnet ist und der Server NPS die einem gerufenen Fernsprechendgerät zugeordnete Fernsprechrufnummer auf eine zweite, (interne) Fernsprechrufnummer umwertet, wenn der Teilnehmer des gerufenen Fernsprechendgerätes zu einem anderen Anschlußnetzbetreiber gewechselt ist.

Der Server NPS wird von einem oder mehreren miteinander verbundenen Rechnern gebildet, auf deren Software-Plattform Applikationsprogramme ablaufen, die die Funktionen des Servers NPS steuern. Der Server NPS kann beispielsweise ein Dienststeuerpunkt (SCP = Service Control Point) gemäß der IN Architektur sein, der von Dienstvermittlungspunkten (SSP = Service Switching Points) des Kommunikationsnetzes TELENET1 bei jedem Verbindungsaufbau getriggert wird und dann den oben beschriebenen Rufnummernportabilitätsdienst ausführt. Es ist aber auch möglich, daß der Server NPS von Signalisierungsknoten des Kommunikationsnetzes TELENET1 getriggert wird und über diese Einfluß auf die Verbindungssteuerung innerhalb des Kommunikationsnetzes TELENET1 nimmt. Eine weitere Möglichkeit besteht darin, daß der Server NPS von einer Funktionseinheit eines Vermittlungsknotens oder eines Signalisierungsknotens des Kommunikationsnetzes TELENET1 gebildet wird und so Einfluß auf die Verbindungssteuerung des Kommunikationsnetzes TELENET1 nimmt. In diesem Fall verfügt der Server NPS dann über keine eigene Hardware- und Software-Plattform mehr und stellt einen virtuellen Server dar.

Der Server SERV stellt einen Dienst innerhalb des Kommunikationsnetzes IPNET bereit und stellt in diesem Sinne einen Server des Kommunikationsnetzes IPNET dar. Der Server SERV führt hierbei folgende Funktionen aus:

Der Server SERV wird von Komponenten des Kommunikationsnetzes IPNET zur Steuerung der Wegeleitung einer Fernsprechverbindung durch das Kommunikationsnetzes IPNET kontaktiert. Der Server SERV ermittelt nun, ob die Fernsprechverbindung an ein Fernsprechendgerät des Kommunikationsnetzes TELENET1 gerichtet ist oder nicht. Dies kann der Server SERV zum einen aus der Adressierung der Fernsprechverbindung ermittelt: Aus der Ziel-Adresse der aufzubauenden VOIP Fernsprechverbindung wird beispielsweise ermittelt, ob die Ziel-Adresse einem bestimmten Adressbereich zugeordnet ist, der für IP Endgeräte reserviert ist. Als Ziel-Adressen werden beispielsweise E.164 Fernsprechrufnummern verwendet. Ist dies nicht der Fall, so ist die Fernsprechverbindung an ein Fernsprechendgerät des Kommunikationsnetzes TELENET1 gerichtet. Ist eine Adressportierung zwischen Endgeräten der Kommunikationsnetze TELENET1 und IPNET möglich, so ist es weiter vorteilhaft, daß der Server SERV zur Durchführung der Ermittlung weiter auf den Server NPS zugreift: Mittels Zugriff auf den Server NPS ermittelt er, ob die Ziel-Adresse von einem Endgerät des Kommunikationsnetzes IPNET zu einem Endgerät des Kommunikationsnetzes TELENET1 oder von einem Endgerät des Kommunikationsnetzes TELENET1 zu einem Endgerät des Kommunikationsnetzes IPNET portiert ist oder nicht. Aus dem vorliegen einer solchen Portierung und dem Adressbereich wird sodann ermittelt, ob die Fernsprechverbindung an ein Fernsprechendgerät des Kommunikationsnetzes TELENET1 gerichtet ist.

Wenn der Server SERV ermittelt, daß die Fernsprechverbindung an ein Fernsprechendgerät des Kommunikationsnetzes TELENET1 gerichtet ist, kontaktiert der Server SERV einen Server des Kommunikationsnetzes IPNET, nämlich den Server NPS. Der Server SERV des Kommunikationsnetzes IPNET fordert von dem Server NPS des Kommunikationsnetzes TELENET1 Rufnummernportabilitätsinformationen über das Fernsprechendgerät an, an das die Fernsprechverbindung gerichtet ist. Der Server SERV des Kommunikationsnetzes IPNET ermittelt sodann mittels der angeforderte Rufnummernportabilitätsinformationen aus einer Menge von zwischen den Kommunikationsnetzen IPNET und TELENET1 zur Verfügung stehenden VOIP Gateways dasjenige VOIP Gateway, über das die Fernsprechverbindung in das Kommunikationsnetzes TELENET1 zu führen ist und initiiert eine Wegeleitung der Fernsprechverbindung über dieses VOIP Gateway in das Kommunikationsnetzes TELENET1.

Der Server SERV wird hierbei von einem oder mehreren miteinander verbundenen Rechnern gebildet, auf denen eine beispielsweise aus einem Betriebssystem und einem Datenbanksystem bestehende Software-Plattform aufsetzt. Software-Plattform und Rechner bilden zusammen einen Computer SP. In Verbindung mit einem Computerprodukt CP führt der Computer SP die oben beschriebenen Funktionen des Servers SERV aus.

Das Computerprodukt CP wird von einem Datenträger und von einem auf diesem Datenträger abgespeicherten Computerprogramm gebildet. Läuft dieses Computerprogramm auf dem Computer SP ab, dann führt der Server SERV die oben beschriebenen Funktionen aus. Der Server SERV wird so von dem Computer CP und diesem Computerprogramm gebildet. Das Computerprodukt CP kann auch allein von diesem Computerprogramm als solchem gebildet werden.

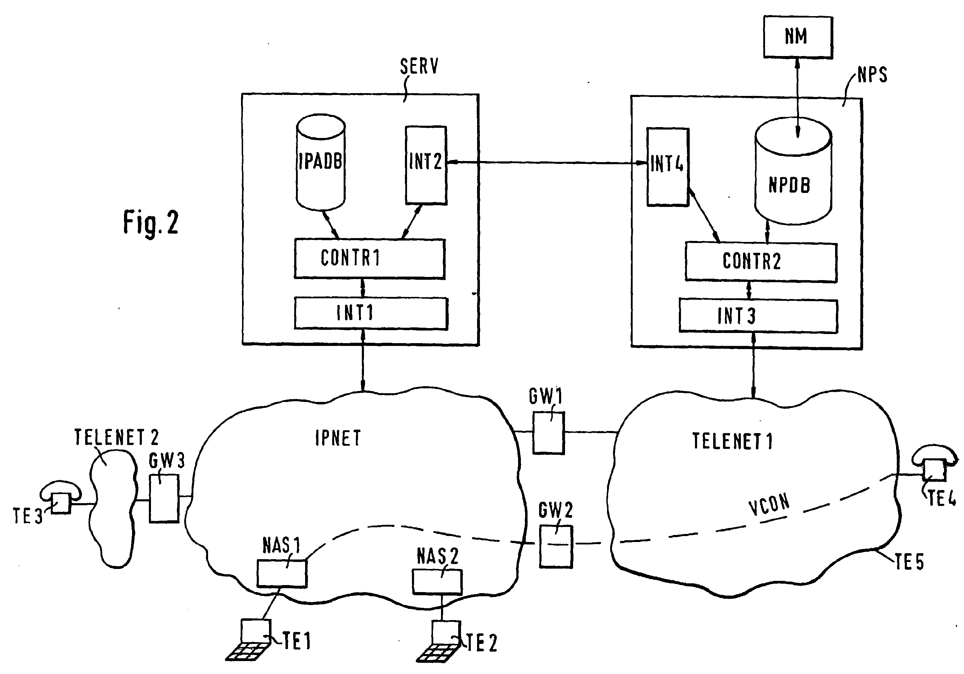

Im folgenden wird der detaillierte Aufbau des Servers SERV und der Ablauf des erfindungsgemäßen Verfahrens anhand von Fig. 2 erläutert.

Fig. 2 zeigt die Kommunikationsnetze IPNET, TELENET1 und TELENET2, die VOIP Gateways GW1 bis GW3, die Server SERV und NPS, eine Managementeinheit NM und die Endgeräte TE1 bis TE5.

Aus funktioneller Sicht weist der Server SERV eine Datenbank IPADB, eine Steuereinheit CONTR1 und zwei Schnittstelleneinheiten INT1 und INT2 auf.

Die Schnittstelleneinheit INT2 dient der Kommunikation der Steuereinheit CONTR1 mit dem Server NPS des Kommunikationsnetzes TELENET1. Die Schnittstelleneinheit INT2 stellt hierzu insbesondere Funktionen zur Bearbeitung der für diese Kommunikation notwendigen Protokollstack zur Verfügung.

Der Server SERV des Kommunikationsnetzes IPNET kontaktiert den Server NPS des Kommunikationsnetzes TELENET1 mittels des INAP Protokolls. Die Kommunikation zwischen den Servern SERV und NPS erfolgt hierbei vorzugsweise über das Signalisierungssystem des Kommunikationsnetzes TELENET1. Die Schnittstelleneinheit INT1 umfaßt somit Funktionen zur Bearbeitung des Protokollstacks des Nr. 7 Signalisierungssystems und des INAP-Protokolls (INAP = Intelligent Network Application Part). Es ist jedoch auch möglich, daß das INAP-Protokoll zwischen den Servern SERV und NPS über einen IP Protokollstack (IP = Internet Protocol) transportiert wird. Weiter kann an Stelle des INAP Protokolls beispielsweise auch das CAP Protokoll oder das MAP Protokoll (CAP = Camel Application Part, MAP = Mobile Application Part) verwendet werden.

Es ist auch möglich, daß der Server SERV des Kommunikationsnetzes IPNET den Server NPS des Kommunikationsnetzes TELENET1 mittels allgemeiner Mechanismen für die Kommunikation zwischen Software Applikationen kontaktiert. Die Kommunikation zwischen den Servern NPS und SERV kann so beispielsweise über einen Software-Bus erfolgen, beispielsweise gemäß der CORBA Architektur (CORBA = Common Object Request Broker). Dies ist insbesondere von Vorteil, wenn der Server SERV des Kommunikationsnetzes IPNET und der Server NPS des Kommunikationsnetzes TELENET1 auf derselben Systemplattform oder auf zwei ähnlich aufgebauten Systemplattformen bereitstehen und über Mechanismen dieser Systemplattform bzw. dieser Systemplattformen miteinander kommunizieren.

Die Schnittstelleneinheit INT1 dient der Kommunikation der Steuereinheit CONTR1 mit Komponenten des Kommunikationsnetzes IPNET. Solche Komponenten sind Netzzugangs-Server, über die Endgeräte an das Kommunikationsnetzes IPNET angebunden sind, spezielle VOIP Server des Kommunikationsnetzes IPNET und/ oder VOIP Gateways, die das Kommunikationsnetzes IPNET mit Fernsprechnetzen, beispielsweise mit den Kommunikationsnetzes TELENET1 und TELENET2 verbinden. Von diesen Komponenten sind in Fig. 2 beispielhaft die VOIP Gateways GW1 bis GW3 und zwei Netzzugangs-Server NAS1 und NAS2 gezeigt, die den Endgeräten TE1 bzw. TE2 Zugang zu dem Kommunikationsnetzes IPNET gewähren. Die Schnittstelleneinheit INT1 stellt hierbei insbesondere Funktionen zur Bearbeitung der für diese Kommunikation notwendigen Protokollstacks und Kommunikationsmechanismen zur Verfügung.

Es ist auch möglich, daß der Server SERV innerhalb des Kommunikationsnetzes IPNET zusätzlich die Funktion eines Gatekeeper (beispielsweise nach ITU-T Empfehlung H.323) wahrnimmt. In diesem Fall ist es vorteilhaft, für die Kommunikation zwischen den Komponenten des Kommunikationsnetzes IPNET und dem Server SERV die für die Kommunikation mit einem Gatekeeper spezifizierten Kommunikationsmechanismen zu verwenden.

Die Datenbank IPADB dient der Zuordnung von VOIP Gateways zu Zugangsnetzen von Fernsprechnetzen. In der Datenbank IPADB sind so Informationen gespeichert, die Zugangsnetzkennungen, Zugangsnetzbetreiberkennungen oder Fernsprechrufnummern-Bereiche mit IP-Adressen von VOIP Gateways verknüpfen. Die mit einem Zugangsnetz verknüpften VOIP Gateways stellen diejenigen VOIP Gateways dar, die einen direkten oder einen besonders günstigen Übergang von dem Kommunikationsnetz IPNET in das jeweilige Zugangsnetz ermöglichen. Es ist hierbei möglich, daß mit einem Zugangsnetz ein VOIP Gateway oder mehrere VOIP Gateways verknüpft sind. Sind mehrere VOIP Gateways mit einem Zugangsnetz verknüpft, so ist es vorteilhaft, der jeweiligen Verknüpfung noch weiterer Parameter hinzuzufügen, die als Auswahlkriterien für die Auswahl eines dieser mehreren VOIP Gateways dienen. In der Datenbank sind somit beispielsweise die Zugangsnetzkennungen der Zugangsnetze LEC1 bis LEC3 mit den VOIP Gateways GW1, GW2 bzw. GW2 verknüpft.

Die Steuereinheit CONTR1 steuert die Wegeleitung einer speziellen Fernsprechverbindung durch das Kommunikationsnetze IPNET, wenn sie hierfür von einer der oben beschriebenen Komponenten des Kommunikationsnetze IPNET über die Schnittstelleneinheit INT1 kontaktiert wird. Zur Kontaktierung senden die Komponenten des Kommunikationsnetze IPNET beispielsweise eine Anforderungsnachricht über das Kommunikationsnetze IPNET an den Server SERV, die die Ursprungs- und die Zieladresse einer aufzubauenden VOIP Fernsprechverbindung an den Server SERV übermittelt. Die Steuereinheit wird auf eine solche Anforderungsnachricht hin für die in der Anforderungsnachricht spezifizierte spezielle VOIP Fernsprechverbindung getriggert. Ein Prozeß wird erzeugt, der ermittelt, über welches der mit dem Kommunikationsnetze IPNET verbundenen VOIP Gateways diese VOIP Fernsprechverbindung zu führen ist, und der sodann eine entsprechende Wegeleitung durch das Kommunikationsnetze IPNET veranlaßt.

Wenn dieser Prozeß der Steuereinheit CONTR1 aus der Ziel-Adresse oder der Art der Ziel-Adresse der aufzubauenden VOIP Fernsprechverbindung und gegebenenfalls weiteren, von der Komponente des Kommunikationsnetzes IPNET übermittelten Daten ermittelt, daß die spezielle Fernsprechverbindung an ein Fernsprechendgerät eines Fernsprechnetzes gerichtet ist, kontaktiert er mittels der Schnittstelleneinheit INT2 einen Server dieses Fernsprechnetzes.

Ist eine Portierung von Ziel-Adressen zwischen Endgeräten der Kommunikationsnetze TELENET1 und IPNET möglich, so ist es vorteilhaft, der Prozeß auf einen Rufnummernportabilitätsserver zugreift, um zu Ermitteln, ob die spezielle Fernsprechverbindung an ein Fernsprechendgerät eines Fernsprechnetzes gerichtet ist oder nicht. Ein solcher Rufnummernportabilitätsserver kann von einem zentralen Server gebildet werden, in dem solche Portierungen abgespeichert sein. Er kann aber auch beispielsweise von dem Server NPS, einem zentralen Server des Kommunikationsnetzes IPNET oder einer Datenbank des Servers SERV gebildet werden.

Der Prozeß empfängt bei der Durchführung dieser Funktionen von der anfordernden Komponente des Kommunikationsnetze IPNET beispielsweise die Fernsprechrufnummer, mittels der das gerufene Endgerät im Fernsprechnetz adressiert ist, als Ziel-Adresse der speziellen Fernsprechverbindung. Aus der Fernsprechrufnummer ermittelt der Prozeß, welchem Fernsprechnetz das gerufene Fernsprechendgerät zugeordnet ist. Sodann ermittelt er mittels einer Zuordnungsliste, welcher Server diesem Fernsprechnetz zugeordnet ist und wie dieser Server zu kontaktieren ist. Anschließend sendet der Prozeß diese Fernsprechrufnummer in einer Anforderungsnachricht mittels der Schnittstelleneinheit INT2 an den ermittelten Server dieses Fernsprechnetzes. Mit der Anforderungsnachricht fordert der Prozeß den adressierten Server auf, Rufnummernportabititätsinformattonen über das in der Anforderungsnachricht durch seine Fernsprechrufnummer spezifizierte Fernsprechendgerät an den Server SERV zurückzusenden. Der adressierte Server des Fernsprechnetzes übermittelt auf die Anforderungsnachricht als Rufnummernportabilitätsinformationen eine Kennung desjenigen Zugangsnetzes oder Zugangsnetzbetreibers, dem das in der Anforderungsnachricht spezifizierte Fernsprechendgerät zugeordnet ist.

Ist eine Portierung von Ziel-Adressen zwischen Endgeräten der Kommunikationsnetze TELENET1 und IPNET möglich, so kann diese Rufnummernportabilitätsfunktion auch Informationen über eine solche Portierung umfassen. Damit ist nur ein Zugriff auf einen einzigen Server notwendig, um zum einen zu Ermitteln, ob die spezielle Fernsprechverbindung an ein Fernsprechendgerät eines Fernsprechnetzes gerichtet ist, und zum anderen zu Ermitteln, über welches VOIP Gateway die Fernsprechverbindung dann gegebenenfalls in das Fernsprechnetz geleitet wird.

Es ist jedoch auch möglich, daß der adressierte Server des Fernsprechnetzes als Rufnummernportabilitätsinformationen eine der übermittelten Fernsprechrufnummer zugeordnete portierte Fernsprechrufnummer übermittelt, wenn das der übermittelten Fernsprechrufnummer zugeordnete Fernsprechendgerät von einem ersten zu einem zweiten Anschlußnetzbetreiber portiert ist. Wenn das der übermittelten Fernsprechrufnummer zugeordnete Fernsprechendgerät nicht portiert ist, so wird als Rufnummernportabilitätsinformationen eine entsprechende Nachricht, beispielsweise eine spezielle Kennung, übermittelt.

Der Prozeß der Steuereinheit CONTR1 ermittelt sodann mittels der von dem Server des Fernsprechnetzes übermittelten Rufnummernportabilitätsinformationen und mittels Zugriff auf die Datenbank IPADB aus einer Menge von zwischen dem Kommunikationsnetze IPNET und dem Fernsprechnetz zur Verfügung stehenden VOIP Gateways dasjenige VOIP Gateway, über das die spezielle Fernsprechverbindung in das Fernsprechnetz zu führen ist. Die Menge von zwischen dem Kommunikationsnetze IPNET und dem Fernsprechnetz zur Verfügung stehenden VOIP Gateways wird von den VOIP Gateways gebildet, die in der Datenbank IPADB mit Zugangsnetze dieses Fernsprechnetzes verknüpft sind. Dies sind vorzugsweise alle VOIP Gateways, die einen Übergang von dem Kommunikationsnetze IPNET in Zugangsnetze dieses Fernsprechnetzes ermöglichen. Mit der von dem Server des Fernsprechnetzes übermittelten Rufnummernportabilitätsinformationen als Suchschlüssel wird von dem Prozeß auf die Datenbank IPADB zugegriffen. Mittels dieses Zugriff auf die Datenbank IPADB wird so das mit der Zugangsnetzkennung, der Zugangsnetzbetreiberkennung oder der Fernsprechrufnummer/ portierten Fernsprechrufnummer verknüpfte VOIP Gateway oder VOIP gateways ermittelt. Werden mehrere VOIP Gateways ermittelt, so wählt der Prozeß nach vorgegebenen Kriterien (z. B.: gleichmäßige Auslastung, Gebührenminimierung) eines dieser VOIP Gateways aus. Das so ermittelte VOIP Gateway stellt dasjenige VOIP Gateway dar, über das die Fernsprechverbindung in das Fernsprechnetz zu führen ist.

Sodann initiiert der Prozeß der Steuereinheit CONTR1 eine Wegeleitung der speziellen Fernsprechverbindung über dieses ermittelte VOIP Gateway in das Fernsprechnetz, indem er eine Nachricht an die anfordernde Komponente sendet, in der er dieser die IP Adresse des ermittelten VOIP Gateways übermittelt.

Es ist weiter von Vorteil, daß der Server SERV weiter auch die ihm von dem Server des Fernsprechnetzes übermittelte Rufnummernportabilitätsinformationen an die anfordernde Komponente zu Eintragung in die Ziel-Adresse der Fernsprechverbindung oder an das ermittelte VOIP Gateway übermittelt. Mittels dieser Rufnummernportabilitätsinformationen ist es dem ermittelten VOIP Gateway möglich, die Fernsprechverbindung im Fernsprechnetz korrekt zu adressieren. Dies hat den Vorteil, daß im Fernsprechnetz für die spezielle Fernsprechverbindung kein Rufnummernportabilitätsdienst mehr getriggert werden muß und somit ein Datenbankzugriff gespart wird.

Der Server NPS weist zwei Schnittstelleneinheiten INT3 und INT4, eine Steuereinheit CONTR2 und eine Datenbank NPDB auf.

Die Schnittstelleneinheit INT4 ist analog zur Schnittstelleneinheit INT2 aufgebaut.

Die Schnittstelleneinheit INT3 dient der in der Beschreibung zu Fig. 1 spezifizierten Kommunikation mit Komponenten des Kommunikationsnetzes TELENET1.

Die Datenbank NPDB enthält Informationen, die Fernsprechrufnummern des Kommunikationsnetzes TELENET1 Rufnummernportabilitätsinformationen zuordnen. Mittels der Managementeinheit NM können diese Informationen zur Rufnummernverwaltung innerhalb des Kommunikationsnetzes TELENET1 verändert werden.

Die Steuereinheit CONTR2 stellt zum einen mittels Zugriff auf die Datenbank NPDP einen Rufnummernportabilitätsdienst innerhalb des Kommunikationsnetzes TELENET1 zur Verfügung. Weiter übermittelt sie auf Anforderung von dem Server SERV Rufnummernportabilitätsinformationen an den Server SERV. Es ist hierbei auch möglich, daß von der Steuereinheit CONTR2 nicht unterschieden wird, ob es sich um die Erbringung eines Rufnummerportabilitätsdienstes für das Kommunikationsnetz TELENET1 oder um die Beantwortung einer Anfrage des Servers SERV handelt. Voraussetzung hierfür ist, daß der Server SERV seine Anforderungsnachricht entsprechend gleich gestaltet und die Antwortnachricht entsprechend interpretiert. Dies hat den Vorteil, daß die Steuereinheit CONTR2 einfacher aufgebaut werden kann und daß bestehende Systeme nicht verändert werden müssen.

Das Endgerät TE1 initiiert den Aufbau einer VOIP Fernsprechverbindung VCON, indem es eine entsprechende Anforderungsnachricht an seinen Netzzugangs-Server NAS1 sendet. Der Netzzugangs-Server NAS1 kontaktiert sodann zur Wegeleitung der Fernsprechverbindung VCON durch das Kommunikationsnetz IPNET den Server SERV, der daraufhin die Wegeleitung der Fernsprechverbindung VCON durch das Kommunikationsnetz IPNET steuert.

Wenn die VOIP Fernsprechverbindung von dem Endgerät TE3 initiiert worden wäre, würde das VOIP Gateway GW3 den Server SERV zur Wegeleitung der Fernsprechverbindung durch das Kommunikationsnetz IPNET kontaktieren.

Der Server SERV ermittelt nun, daß die Fernsprechverbindung VCON an ein Fernsprechendgerät des Kommunikationsnetz TELENET1 gerichtet ist, nämlich an das Endgerät TE4. Sie kontaktiert nun den Server NPS und fordert von diesem Rufnummernportabilitätsinformationen über das Endgerät TE4 an, an das die Fernsprechverbindung VCON gerichtet ist. Mittels der angeforderte Rufnummernportabilitätsinformationen ermittelt der Server SERV aus einer Menge von zwischen dem Kommunikationsnetz IPNET und dem Kommunikationsnetz TELENET1 zur Verfügung stehenden VOIP Gateways das VOIP Gateway GW2, über das die Fernsprechverbindung VCON in das Kommunikationsnetz TELENET1 zu führen ist. Sodann initiiert der Server SERV eine Wegeleitung der Fernsprechverbindung VCON über dieses VOIP Gateway GW2 in das Kommunikationsnetz TELENET1. Das VOIP Gateway GW2 initiiert sodann den weiteren Verbindungsaufbau durch das Kommunikationsnetz TELENET1 zu dem Endgerät VCON. Damit ist der Aufbau der Fernsprechverbindung VCON zwischen den Endgeräten TE1 und TE4 komplett initiiert.

## Patentansprüche

1. Verfahren zur Unterstützung des Aufbaus einer Fernsprechverbindung (VCON), die von einem rufenden Endgerät (TE1) über ein IP Netz (IPNET) an ein Fernsprechendgerät (TE4) eines Fernsprechnetzes (TELENET1) geführt wird, wobei bei dem Verfahren zur Wegeleitung der Fernsprechverbindung (VCON) durch das IP Netz (IPNET) ein Server (SERV) des IP Netzes kontaktiert wird, der die Wegeleitung der Fernsprechverbindung (VCON) durch das IP Netz (IPNET) steuert,
**dadurch gekennzeichnet, daß** der Server (SERV) des IP Netzes, wenn er ermittelt, daß die Fernsprechverbindung (VCON) an ein Fernsprechendgerät (TE3 bis TE5) eines Fernsprechnetzes (TELENET1, TELENET2) gerichtet ist, einen Server (NPS) dieses Fernsprechnetzes (TELENET1) kontaktiert, daß der Server (SERV) des IP Netzes von dem Server (NPS) des Fernsprechnetzes Rufnummernportabilitätsinformationen über das Fernsprechendgerät (TE4) anfordert, an das die Fernsprechverbindung (VCON) gerichtet ist, daß der Server (SERV) des IP Netzes mittels der angeforderten Rufnummernportabilitätsinformationen aus einer Menge von zwischen dem IP Netz (IPNET) und dem Fernsprechnetz (TELENET1) zur Verfügung stehenden VOIP Gateways (GW1, GW2) dasjenige VOIP Gateway (GW2) ermittelt, über das die Fernsprechverbindung (VCON) in das Fernsprechnetz (TELENET1) zu führen ist, und eine Wegeleitung der Fernsprechverbindung (VCON) über dieses VOIP Gateway (GW2) in das Fernsprechnetz (TELENET1) initiiert.

2. Verfahren nach Anspruch 1, **dadurch gekennzeichnet, daß** das gerufene Fernsprechendgerät (TE4) mittels der ihm im Fernsprechnetz (TELENET1) zugeordneten Fernsprechrufnummer adressiert ist und daß der Server (SERV) des IP Netzes diese Fernsprechrufnummer an den Server (NPS) des Fernsprechnetzes zur Ermittlung der Rufnummernportabilitätsinformationen übermittelt.

3. Verfahren nach Anspruch 2, **dadurch gekennzeichnet, daß** der Server (NPS) des Fernsprechnetzes als Rufnummernportabilitätsinformationen eine der übermittelten Fernsprechrufnummer zugeordnete portierte Fernsprechrufnummer übermittelt, wenn das Fernsprechendgerät von einem ersten zu einem zweiten Anschlußnetzbetreiber (OP1 bis OP3) portiert ist.

4. Verfahren nach Anspruch 1, **dadurch gekennzeichnet, daß** der Server (NPS) des Fernsprechnetzes als Rufnummernportabilitätsinformationen eine Kennung desjenigen Zugangsnetzes (LEC1 bis LEC3) oder Zugangsnetzbetreibers (OP1 bis OP3) übermittelt, dem das gerufene Fernsprechendgerät (TE4) zugeordnet ist.

5. Verfahren nach Anspruch 1, **dadurch gekennzeichnet, daß** der Server (SERV) des IP Netzes aus der Adressierung der Fernsprechverbindung (VCON) ermittelt, ob die Fernsprechverbindung (VCON) an ein Fernsprechendgerät (TE3 bis TE5) eines Fernsprechnetzes (TELENET1, TELENET2) gerichtet ist oder nicht.

6. Verfahren nach Anspruch 1, **dadurch gekennzeichnet, daß** der Server (SERV) des IP Netzes mittels Zugriff auf den Server (NPS) des Fernsprechnetzes ermittelt, ob die Fernsprechverbindung (VCON) an ein Fernsprechendgerät (TE3 bis TE5) eines Fernsprechnetzes (TELENET1, TELENET2) gerichtet ist oder nicht.

7. Verfahren nach Anspruch 1, **dadurch gekennzeichnet, daß** der Server (SERV) des IP Netzes den Server (NPS) des Fernsprechnetzes mittels eines INAP Protokolls kontaktiert.

8. Verfahren nach Anspruch 1, **dadurch gekennzeichnet, daß** der Server (SERV) des IP Netzes und der Server (NPS) des Fernsprechnetzes auf derselben Systemplattform implementiert sind und über diese Systemplattform miteinander kommunizieren.

9. Server (SERV) zur Unterstützung des Aufbaus von Fernsprechverbindungen (VCON) zwischen rufenden Endgeräten (TE1 bis TE3) und gerufenen Endgeräten (TE4, TE5) über ein IP Netz (IPNET), wobei der Server (SERV) mit einer Schnittstelleneinheit (INT1) zur Kommunikation mit Komponenten (NAS1, NAS2, GW3) des IP Netzes (IPNET) versehen ist und der Server (SERV) mit einer Steuereinheit (CONTR1) versehen ist, die so ausgestaltet ist, daß sie die Wegeleitung einer speziellen Fernsprechverbindung (VCON) durch das IP Netz (IPNET) steuert, wenn sie hierfür von einer der Komponenten (NAS1, NAS2, GW3) des IP Netzes kontaktiert wird,
**dadurch gekennzeichnet, daß** die Steuereinheit (CONTR1) weiter so ausgestaltet ist, daß sie, wenn sie ermittelt, daß die spezielle Fernsprechverbindung (VCON) an ein Fernsprechendgerät (TE4) eines Fernsprechnetzes (TELENET1) gerichtet ist, einen Server (NPS) dieses Fernsprechnetzes (TELENET1) kontaktiert und daß sie von dem Server (NPS) des Fernsprechnetzes Rufnummernportabilitätsinformationen über dasjenige Fernsprechendgerät (TE4) anfordert, an das die spezielle Fernsprechverbindung (VCON) gerichtet ist, und daß die Steuereinheit (CONTR1) weiter so ausgestaltet ist, daß sie mittels der angeforderten Rufnummernportabilitätsinformationen über dasjenige Fernsprechendgerät (TE4), an das die spezielle Fernsprechverbindung (VCON) gerichtet ist, aus einer Menge von zwischen dem IP Netz (IPNET) und dem Fernsprechnetz (TELENET1) zur Verfügung stehenden VOIP Gateways (GW1, GW2) dasjenige VOIP Gateway (GW2) ermittelt, über das die spezielle Fernsprechverbindung (VCON) in das Fernsprechnetz (TELENET1) zu führen ist, und daß sie eine Wegeleitung der speziellen Fernsprechverbindung (VCON) über dieses VOIP Gateway (GW2) in das Fernsprechnetz (TELENET1) initiiert.

10. Server (SERV) nach Anspruch 9, **dadurch gekennzeichnet, daß** der Server im IP Netz (IPNET) als Gatekeeper fungiert.

11. Computer Produkt (CP) zur Unterstützung des Aufbaus von Fernsprechverbindungen (VCON) zwischen rufenden Endgeräten (TE1 bis TE3) und gerufenen Endgeräten (TE4, TE5) über eine IP Netz (IPNET), wobei das Computer Produkt (CP) so ausgestaltet ist, daß es in Verbindung mit einem Computer (SP) eine Steuereinheit (CONTR1) bereitstellt, die die Wegeleitung einer speziellen Fernsprechverbindung (VCON) durch das IP Netz (IPNET) steuert, wenn sie hierfür von einer Komponente (NAS1, NAS2, GW3) des IP Netzes kontaktiert wird,
**dadurch gekennzeichnet, daß** das Computer Produkt (CP) weiter so ausgestaltet ist, daß die Steuereinheit (CONTR1), die es in Verbindung mit einem Computer (SP) bereitstellt, weiter so ausgestaltet ist, daß sie, wenn sie ermittelt, daß die spezielle Fernsprechverbindung (VCON) an ein Fernsprechendgerät (TE4) eines Fernsprechnetzes (TELENET1) gerichtet ist, einen Server (NPS) dieses Fernsprechnetzes (TELENET1) kontaktiert und von dem Server (NPS) des Fernsprechnetzes Rufnummernportabilitätsinformationen über dasjenige Fernsprechendgerät (TE4) anfordert, an das die spezielle Fernsprechverbindung (VCON) gerichtet ist, und daß sie mittels der angeforderten Rufnummernportabilitätsinformationen über dasjenige Fernsprechendgerät (TE4), an das die spezielle Fernsprechverbindung (VCON) gerichtet ist, aus einer Menge von zwischen dem IP Netz (IPNET) und dem Fernsprechnetz (TELENET1) zur Verfügung stehenden VOIP Gateways (GW1, GW2) dasjenige VOIP Gateway (GW2) ermittelt, über das die spezielle Fernsprechverbindung (VCON) in das Fernsprechnetz (TELENET1) zu führen ist, und eine Wegeleitung der speziellen Fernsprechverbindung (VCON) über dieses VOIP Gateway (GW2) in das Fernsprechnetz (TELENET1) initiiert.

## Claims

1. A method of supporting the establishment of a telephone call (VCON) from a calling terminal (TE1) through an IP network (IPNET) to a telephone terminal (TE4) of a telephone network (TELENET1), said method comprising the step of contacting a server (SERV) of the IP network (IPNET) for routing the call (VCON) through the IP network (IPNET),
**characterized in that** if the server (SERV) of the IP network determines that the call (VCON) is directed to a telephone terminal (TE3 to TE5) of a telephone network (TELENET1, TELENET2), it contacts a server (NPS) of this telephone network (TELENET1), that the server (SERV) of the IP network requests from the server (NPS) of the telephone network number portability information about the telephone terminal (TE4) to which the call (VCON) is directed, and that based on the requested number portability information, the server (SERV) of the IP network determines from a set of VOIP gateways (GW1, GW2) available between the IP network (IPNET) and the telephone network (TELENET1) that VOIP gateway (GW2) through which the call (VCON) is to be routed into the telephone network (TELENET1), and initiates the routing of the call (VCON) through this VOIP gateway (GW2) into the telephone network (TELENET1).

2. A method as claimed in claim 1, **characterized in that** the called terminal (TE4) is addressed by the number assigned to it in the telephone network (TELENET1), and that the server (SERV) of the IP network communicates this number to the server (NPS) of the telephone network for determining the number portability information.

3. A method as claimed in claim 2, **characterized in that** as the number portability information, the server (NPS) of the telephone network communicates a ported number assigned to the communicated number if the telephone terminal has been ported from a first to a second access network operator (OP1 to OP3).

4. A method as claimed in claim 1, **characterized in that** as the number portability information, the server (NPS) of the telephone network communicates an identification code of that access network (LEC1 to LEC3) or access network operator (OP1 to OP3) with which the called telephone terminal (TE4) is associated.

5. A method as claimed in claim 1, **characterized in that** the server (SERV) of the IP network determines from the address of the call (VCON) whether or not the call (VCON) is directed to a telephone terminal (TE3 to TE5) of a telephone network (TELENET1, TELENET2).

6. A method as claimed in claim 1, **characterized in that** the server (SERV) of the IP network, by accessing the server (NPS) of the telephone network, determines whether the call (VCON) is directed to a telephone terminal (TE3 to TE4) of a telephone network (TELENET1, TELENET2) or not.

7. A method as claimed in claim 1, **characterized in that** the server (SERV) of the IP network contacts the server (NPS) of the telephone network using an INAP protocol.

8. A method as claimed in claim 1, **characterized in that** the server (SERV) of the IP network and the server (NPS) of the telephone network are implemented on the same system platform and communicate with each other via this system platform.

9. A server (SERV) for supporting the establishment of telephone calls (VCON) between calling terminals (TE1 to TE3) and called terminals (TE4, TE5) through an IP network (IPNET), the server (SERV) comprising an interface unit (INT1) for communication with components (NAS1, NAS2, GW3) of the IP network (IPNET), and further comprising a control unit (CONTR1) designed to control the routing of a specific call (VCON) through the IP network (IPNET) when contacted for this purpose by one of the components (NAS1, NAS2, GW3) of the IP network,
**characterized in that** the control unit (CONTR1) is further designed in such a way that when it determines that the specific call (VCON) is directed to a telephone terminal (TE4) of a telephone network (TELENET1), it contacts a server (NPS) of this telephone network (TELENET1) and requests from the server (NPS) of the telephone network number portability information about the telephone terminal (TE4) to which the specific call (VCON) is directed, and that the control unit (CONTR1) is further designed to determine, on the basis of the requested number portability information, that VOIP gateway (GW2) of a set of VOIP gateways (GW1, GW2) available between the IP network (IPNET) and the telephone network (TELENET1) through which the specific call is to be routed into the telephone network (TELENET1), and to initiate the routing of the specific call (VCON) through this VOIP gateway (GW2) into the telephone network (TELENET1).

10. A server (SERV) as claimed in claim 9, **characterized in that** it acts as a gatekeeper in the IP network (IPNET).

11. A computer product (CP) for supporting the establishment of telephone calls (VCON) between calling terminals (TE1 to TE3) and called terminals (TE4, TE5) through an IP network (IPNET), the computer product (CP) being designed to provide, in conjunction with a computer (SP), a control unit (CONTR1) which controls the routing of a specific call (VCON) through the IP network (IPNET) when contacted for this purpose by a component (NAS, NAS2, GW3) of the IP network,
**characterized in that** the computer product (CP) is further designed in such a way that the control unit (CONTR1) which it implements in conjunction with a computer (SP) is so designed that when it determines that the specific call (VCON) is directed to a telephone terminal (TE4) of a telephone network (TELENET1), it contacts a server (NPS) of this telephone network (TELENET1), requests from this server (NPS) number portability information about the telephone terminal (TE4) to which the specific call (VCON) is directed, and, based on the requested number portability information, determines that VOIP gateway (GW2) of a set of VOIP gateways (GW1, GW2) available between the IP network (IPNET) and the telephone network (TELENET1) through which the specific call (VCON) is to be routed into the telephone network (TELENET1), and initiates the routing of the specific call (VCON) through this VOIP gateway (GW2) into the telephone network (TELENET1).

## Revendications

1. Procédé pour assister l'établissement d'une liaison téléphonique (VCON), qui est guidée d'un terminal (TE1) appelant par un réseau IP (IPNET) sur un terminal téléphonique (TE4) d'un réseau téléphonique (TELENET1), un serveur (SERV) du réseau IP étant contacté par le réseau IP (IPNET) dans le procédé pour l'acheminement de la liaison téléphonique (VCON), lequel serveur commande l'acheminement de la liaison téléphonique (VCON) par le réseau IP (IPNET), **caractérisé en ce que** le serveur (SERV) du réseau IP contacte un serveur (NPS) de ce réseau téléphonique (TELENET1) lorsqu'il détermine que la liaison téléphonique (VCON) est dirigée sur un terminal téléphonique (TE3 à TE5) d'un réseau téléphonique (TELENET1, TELENET2), **en ce que** le serveur (SERV) du réseau IP demande au serveur (NPS) du réseau téléphonique des informations sur la portabilité de numéros d'appel par le terminal téléphonique (TE4), sur lequel est dirigée la liaison téléphonique (VCON), **en ce que** le serveur (SERV) du réseau IP détermine au moyen des informations demandées sur la portabilité de numéros d'appel à partir d'une quantité de passerelles VOIP (GW1, GW2) mises à disposition entre le réseau IP (IPNET) et le réseau téléphonique (TELENBT1) la passerelle VOIP (GW2), par laquelle la liaison téléphonique (VCON) doit être guidée dans le réseau téléphonique (TELENET1), et initialise un acheminement de la liaison téléphonique (VCON) par cette passerelle VOIP (GW2) dans le réseau téléphonique (TELENET1).

2. Procédé selon la revendication 1, **caractérisé en ce que** le terminal téléphonique (TE4) appelé est adressé au moyen du numéro d'appel téléphonique qui lui est attribué dans le réseau téléphonique (TELENET1) et **en ce que** le serveur (SERV) du réseau IP transmet ce numéro d'appel téléphonique au serveur (NPS) du réseau téléphonique pour déterminer les informations sur la portabilité de numéros d'appel.

3. Procédé selon la revendication 2, **caractérisé en ce que** le serveur (NPS) du réseau téléphonique transmet comme informations sur la portabilité de numéros d'appel un numéro d'appel téléphonique porté et attribué au numéro d'appel téléphonique transmis lorsque le terminal téléphonique est porté d'un premier exploitant de réseau de raccordement à un second exploitant de réseau de raccordement (OP1 à OP3).

4. Procédé selon la revendication 1, **caractérisé en ce que** le serveur (NPS) du réseau téléphonique transmet comme informations sur la portabilité de numéros d'appel un code du réseau d'accès (LEC1 à LEC3) ou de l'exploitant de réseau d'accès (OP1 à OP3) auquel est attribué le terminal téléphonique (TE4) appelé.

5. Procédé selon la revendication 1, **caractérisé en ce que** le serveur (SERV) du réseau IP détermine à partir de l'adressage de la liaison téléphonique (VCON) si la liaison téléphonique (VCON) est dirigée ou non sur un terminal téléphonique (TE3 à TE5) d'un réseau téléphonique (TELENET1, TELENET2).

6. Procédé selon la revendication 1, **caractérisé en ce que** le serveur (SERV) du réseau IP détermine au moyen de l'accès au serveur (NPS) du réseau téléphonique si la liaison téléphonique (VCON) est dirigée ou non sur un terminal téléphonique (TE3 à TE5) d'un réseau téléphonique (TELENET1, TELENET2).

7. Procédé selon la revendication 1, **caractérisé en ce que** le serveur (SERV) du réseau IP contacte le serveur (NPS) du réseau téléphonique au moyen d'un protocole INAP.

8. Procédé selon la revendication 1, **caractérisé en ce que** le serveur (SERV) du réseau IP et le serveur (NPS) du réseau téléphonique sont implémentés dans la même plate-forme du système et communiquent entre eux au moyen de cette plate-forme du système.

9. Serveur (SERV) pour assister l'établissement de liaisons téléphoniques (VCON) entre des terminaux (TE1 à TE3) appelants et des terminaux (TE4, TE5) appelés au moyen d'un réseau IP (IPNET), le serveur (SERV) étant doté d'une unité d'interface (INT1) pour la communication avec des composants (NAS1, NAS2, GW3) du réseau IP (IPNET) et le serveur (SERV) étant doté d'une unité de commande (CONTR1) qui est conçue de telle sorte qu'elle contrôle l'acheminement d'une liaison téléphonique (VCON) spéciale par le réseau IP (IPNET) lorsqu'elle est contactée à cet effet par l'un des composants (NAS1, NAS2, GW3) du réseau IP,
**caractérisé en ce que** l'unité de commande (CONTR1) est conçue également de telle sorte que, lorsqu'elle détermine que la liaison téléphonique (VCON) spéciale est dirigée sur un terminal téléphonique (TE4) d'un réseau téléphonique (TELENET1), elle contacte un serveur de ce réseau téléphonique (TELENET1) et qu'elle demande au serveur (NPS) du réseau téléphonique des informations sur la portabilité de numéros d'appel par le terminal téléphonique (TE4) sur lequel est dirigée la liaison téléphonique (VCON), et **en ce que** l'unité de commande (CONTR1) est conçue également de telle sorte qu'elle détermine au moyen des informations demandées sur la portabilité de numéros d'appel par le terminal téléphonique (TE4), sur lequel est dirigée la liaison téléphonique (VCON) spéciale, à partir d'une quantité de passerelles VOIP (GW1, GW2) mises à disposition entre le réseau IP (IPNET) et le réseau téléphonique (TELENET1), la passerelle VOIP (GW2) par laquelle la liaison téléphonique (VCON) spéciale doit être guidée dans le réseau téléphonique (TELENET1), et **en ce qu'**elle initialise un acheminement de la liaison téléphonique (VCON) spéciale par cette passerelle VOIP (GW2) dans le réseau téléphonique (TELENET1).

10. Serveur (SERV) selon la revendication 9, **caractérisé en ce que** le serveur fait office de portier dans le réseau IP (IPNET).

11. Produit informatique (CP) pour assister l'établissement de liaisons téléphoniques (VCON) entre des terminaux (TE1 à TE3) appelants et des terminaux (TE4, TE5) appelés au moyen d'un réseau IP (IPNET), le produit informatique (CP) étant conçu de telle sorte qu'il met à disposition en liaison avec un ordinateur (SP) une unité de commande (CONTR1) qui contrôle l'acheminement d'une liaison téléphonique (VCON) spéciale par le réseau IP (IPNET) lorsqu'il est contacté à cet effet par un composant (NAS1, NAS2, GW3) du réseau IP,
**caractérisé en ce que** le produit informatique (CP) est conçu également de telle sorte que l'unité de commande (CONTR1), qui le met à disposition en liaison avec un ordinateur (SP), est conçue également de telle sorte que, lorsqu'elle détermine que la liaison téléphonique (VCON) spéciale est dirigée sur un terminal téléphonique (TE4) d'un réseau téléphonique (TELENET1), elle contacte un serveur (NPS) de ce réseau téléphonique (TELENET1) et demande au serveur (NPS) du réseau téléphonique des informations sur la portabilité de numéros d'appel par le terminal téléphonique (TE4), sur lequel est dirigée la liaison téléphonique (VCON) spéciale, et **en ce qu'**elle détermine au moyen des informations demandées sur la portabilité de numéros d'appel par le terminal téléphonique (TE4), sur lequel est dirigé la liaison téléphonique (VCON) spéciale, à partir d'une quantité de passerelles VOIP (GW1, GW2) mises à disposition entre le réseau IP (IPNET) et le réseau téléphonique (TELENET1) la passerelle VOIP (GW2) par laquelle la liaison téléphonique (VCON) spéciale doit être guidée dans le réseau téléphonique (TELENET1), et initialise un acheminement de la liaison téléphonique (VCON) spéciale par cette passerelle VOIP (GW2) dans le réseau téléphonique (TELENET1).
